# EUROPEAN PATENT APPLICATION

(11) **EP 4 502 585 A1**
(43) Date of publication of application: **05.02.2025**
(21) Application number: 24190848.2
(22) Date of filing: 25.07.2024
(51) Int. Cl.: G01N 27/18, G01N 25/18

(54) **THERMAL CONDUCTIVITY SENSOR FOR MEASURING A CONCENTRATION OF A GAS**

(30) Priority: 31.07.2023 US 202318362638; 31.07.2023 LU 504836
(71) Applicant: FLUSSO LIMITED, Cambridge, Cambridgeshire CB3 0QH (GB)
(72) Inventor: UDREA, Florin, Cambridge, CB3 0QH (GB); ALI, Syed Zeeshan, Cambridge, CB3 0QH (GB); GARDNER, Ethan Lance, Cambridge, CB3 0QH (GB); CHIODARELLI, Nicolò, Cambridge, CB3 0QH (GB); LEE, Cerdin, Cambridge, CB3 0QH (GB); SUBIN, Mihhail, Cambridge, CB3 0QH (GB)
(74) Representative: Marks & Clerk LLP

(57) **Abstract**

A thermal conductivity sensor for measuring a concentration of a gas comprises: a substrate portion; an intermediate layer disposed on the substrate portion; a semiconductor layer disposed on the intermediate layer; and a dielectric layer comprising a dielectric membrane, the dielectric membrane provided with a heater; wherein the dielectric membrane is located over a gap, the gap being located in the semiconductor layer. Methods for manufacturing a thermal conductivity sensor are also described.

## Description

### TECHNICAL FIELD

The present disclosure relates to a thermal conductivity sensor for measuring a concentration of a gas, and methods of manufacturing a thermal conductivity sensor.

### BACKGROUND

Thermal conductivity sensors can be used to measure a concentration of a gas. For example, a change in gas concentration may be detected as a change in resistance of a heater provided in the thermal conductivity sensor.

The sensitivity of a sensor may vary depending on the thermal conductivity of the target gas and the difference in thermal conductivity between the target gas and a reference gas (for example air). The sensitivity of a sensor may also depend on the efficiency of the heat transfer from the heater through the target gas. In cases where, for example, the thermal conductivity of the target gas is quite close in value to the thermal conductivity of a reference gas, the efficiency of the heat transfer from the heater through the target gas needs to be increased to ensure satisfactory sensitivity of the sensor.

### SUMMARY

Described herein is a thermal conductivity sensor for measuring a concentration of a gas. The sensor may comprise: a substrate portion; an intermediate layer disposed on the substrate portion; a semiconductor layer disposed on the intermediate layer; and a dielectric layer comprising a dielectric membrane. The dielectric membrane may be provided with a heater. The dielectric membrane may be located over a gap. The gap may be located in the semiconductor layer.

In some examples, the substrate portion, the intermediate layer, and the semiconductor layer may be collectively referred to as a "substrate" and/or a "chip".

Advantageously, the thermal conductivity sensor according to the present disclosure enables very precise control of the thickness of the gap, whereby the thickness of the gap is reliably and precisely defined. As used herein, "thickness of the gap" means the distance between the membrane and the surface of the gap opposite to the membrane. It will be understood that the thickness may be the same across the gap or it may vary at least in one direction. For example, the thickness of the gap may be determined by the thickness of the semiconductor layer which may be precisely controlled across the whole gap. For example, the semiconductor layer may function as a sacrificial layer and the intermediate layer may function as a barrier (for example an etch stop) layer so that the gap extends through the semiconductor layer between the membrane and the intermediate layer.

Precise control of the thickness of the gap may enable the formation of a very small gap between the membrane and the surface of the gap opposite to the membrane, which may increase the percentage amount of heat transferred through the gas in the gap, from the heater and through the membrane, to the surface of the gap opposite to the membrane. This may lead to increased sensitivity of the device.

As the skilled person will understand, where the dielectric membrane and the surface of the gap opposite to the dielectric membrane are within the distance of the device thermal boundary layer, there will be an increase in the percentage of heat transferred between the heater and the surface of the gap opposite to the dielectric membrane, through the gas in the gap. This may increase the proportion of heat transferred through the gas. To significantly improve performance, however, the thickness of the gap may be much less than the thermal boundary layer. As the distance between the dielectric membrane and the surface of the gap opposite to the dielectric membrane reduces, the effect will be more significant, meaning a tightly controlled minimum distance is particularly advantageous.

In addition, it is important that the membrane is sufficiently separated from any surfaces (or layers), that it is prevented from touching those surfaces (or layers) due to manufacturing tolerance or bending (e.g. caused by heating, or residual stress). Any undesired contact of the membrane with the substrate, through the gap, would create a preferential heat transfer path, through the point or region of contact, thus decreasing the percentage of heat transferred through the target gas. The precise control of the gap thickness, enabled by the sensor described herein, therefore, advantageously provides an improved sensitivity of the sensor, while also ensuring reliability and manufacturing precision.

The gap may be located in the intermediate layer. For example, the gap may be formed by removing (e.g. etching) a portion or portions of the semiconductor layer or of both the semiconductor layer and the intermediate layer. For example, the intermediate layer may also function as a sacrificial layer and the substrate portion may function as a barrier (e.g. an etch stop) layer, so that the gap extends, through the semiconductor layer and the intermediate layer, between the membrane and the substrate portion.

It will be understood that the substrate portion and the semiconductor layer may comprise the same or different materials, whereas the intermediate layer is of a different material to the substrate portion and the semiconductor layer. In this way, material from the semiconductor layer, and material from the intermediate layer may be selectively removed during the manufacturing process, leaving behind precise and homogeneous gaps.

For example, the substrate portion may comprise silicon. The intermediate layer may comprise a dielectric. The intermediate layer may comprise an oxide (e.g. silicon dioxide). The semiconductor layer may comprise silicon.

Collectively, the substrate portion, the intermediate layer, and the semiconductor layer may be referred to as a "wafer", for example a silicon-on-insulator (SOI) wafer from which a number of sensors can be formed. For example, the sensor may comprise a SOI chip (e.g. formed from a SOI wafer), the SOI chip comprising the substrate portion (i.e. semiconductor substrate, also referred to as a semiconductor substrate portion), the intermediate layer (the insulator layer) and the semiconductor layer.

Advantageously, the thermal conductivity sensor according to the present disclosure may be manufactured using SOI technology.

SOI wafers, (comprising a substrate portion made of silicon, an intermediate layer made of silicon oxide and a semiconductor layer made of silicon), are readily available in a wide range of thicknesses of the component portions and layers. Said thicknesses are very precisely controlled and gaps obtained by removing portions of silicon and/or silicon oxide, as described above, have very uniform thickness.

It will be understood that the use of SOI wafers, in connection with the sensor of the present disclosure, even though advantageous, is not limiting and other substrates can be used in the same way, as far as they ensure the formation of gaps of highly precise and homogeneous thickness.

It will further be understood that expressions such as "homogeneous thickness" and "homogeneous gaps", as used herein, are related to gaps having a substantially homogeneous surface opposite to the membrane, meaning that said surface is substantially free from protrusion that may come into contact with the membrane when the sensor is in use.

The dielectric layer, and/or the dielectric membrane, may comprise silicon oxide, silicon nitride, or another suitable dielectric and/or any combination thereof.

In some examples, the dielectric membrane may be a microbridge, e.g., a structure formed by removing most of the dielectric material between the heater and the edge of the membrane (i.e. the region where the membrane is adjacent to the semiconductor layer), thereby forming two openings, or slits, in the dielectric layer.

In some examples, additional material (e.g. one or more additional layers) may be present between the semiconductor layer and the dielectric layer so as to fine tune the thickness of the gap to suit specific applications or device design.

The thermal conductivity sensor may comprise a cap layer disposed over the dielectric layer to protect the membrane from external contamination and/or to provide an additional route for heat transfer through the gas, i.e. a route through which heath is transferred through the gas to a receiving surface such as the cap layer. The thermal conductivity sensor may comprise a second gap between the cap layer and the dielectric membrane. As discussed in relation to the gap, the performance of the device may be significantly improved when the thickness of the second gap may be much less than the thermal boundary layer, for example a second gap of 20 µm or less.

The cap layer may be formed by surface micro-machining or any other suitable method.

Advantageously, the (micro-machined) cap layer can enable very precise control of the second gap on a side of the dielectric membrane opposite to the gap. As discussed with reference to the gap, the second gap may also be very small so as to increase the percentage of heat transferred through the gas to the cap layer, further increasing the sensitivity of the sensor. In some examples, a thickness of the cap layer is 5 µm or less. In some examples, a thickness of the second gap is 20 µm or less.

The gap and the second gap may have similar thicknesses.

As the person skilled in the art will understand, "micro-machining" may comprise the fabrication of micro-structures on a substrate and "surface micro-machining" may comprise the fabrication of micro-structures by deposition and patterning of thin films.

The thermal conductivity sensor may comprise a pressure sensor.

The dielectric membrane may be referred to as a primary dielectric membrane to differentiate the primary dielectric membrane from any other dielectric membrane (e.g. a reference dielectric membrane).

In some examples, the dielectric membrane is a primary dielectric membrane, and the thermal conductivity sensor further comprises a reference dielectric membrane provided with a reference heater. The reference dielectric membrane is located over a reference gap. The reference dielectric membrane, the reference heater and the reference gap together provide a reference portion in the sensor of the disclosure, in addition to the primary portion as described above. The primary dielectric membrane is exposed to the external atmosphere, whereas the reference dielectric membrane is disposed in a sealed chamber.

Advantageously, the reference portion of the sensor may enable compensation for any environmental changes, such as changes in temperature, that would otherwise affect the gas concentration measurement. The reference portion may also compensate for other effects, such as common mode noise in the circuitry of supply voltage, and any noise that is common to the primary and reference heaters and/or to any additional temperature sensors.

The reference gap may be located in the semiconductor layer or in both the semiconductor layer and the intermediate layer.

In some examples, the primary dielectric membrane and the reference dielectric membrane may be on two different chips (e.g. formed on two different substrates). One chip, provided with the reference dielectric membrane, may be in a sealed package, while the primary dielectric membrane, on the other chip, may be exposed to the external atmosphere. Alternatively, the dielectric membranes may be on a same chip (e.g. a same substrate) and the package may comprise two parts: one sealed, so as to isolate the reference dielectric membrane, from the external atmosphere, in a sealed chamber, and one exposed so that the primary dielectric membrane is exposed to the external atmosphere.

In some examples, the sealed chamber may contain a vacuum, or a gas such as nitrogen, dry air, and/or any other gas or mixture of gases. Since pressure can affect the thermal conductivity of a gas, and in turn, the sensor behaviour, when the primary membrane is exposed to atmospheric air, preferably, the sealed chamber contains dry air, substantially at atmospheric pressure, in order to minimise any effects due to the difference in the properties and behaviour of the gas to which the membranes are exposed. It will be understood that, if specific applications require the primary membrane to be exposed to an external atmosphere or external environment which is different from atmospheric air, the sealed chamber may preferably contain a gas or gas mixture similar to that of the external environment and preferably at the same pressure.

The primary dielectric membrane that is exposed to the external atmosphere may be disposed in a primary chamber that is in fluid communication with the external atmosphere.

In another example, the dielectric membrane is a primary dielectric membrane, and the dielectric layer further comprises a reference dielectric membrane. The reference dielectric membrane may be provided with a reference heater. The reference dielectric membrane may be located over a reference gap, the reference gap being located in the semiconductor layer.

The thermal conductivity sensor may comprise a cap layer. The cap layer may be arranged to enclose the primary dielectric membrane in a primary chamber. The cap layer may be arranged to enclose the reference dielectric membrane in a reference chamber, the reference chamber being sealed. The cap layer may comprise a cap opening arranged such that the primary chamber is in fluid communication with the external atmosphere.

The primary portion may comprise a primary pressure sensor. The reference portion may comprise a reference pressure sensor.

Any of the pressure sensors may be a capacitive pressure sensor where a pair of metal plates, which form a capacitor, are arranged in the device so that a change in the external atmospheric pressure causes a deformation of the membrane and/or the cap layer so that the distance between the metal plates changes and, with it, the capacitance of the capacitor. The described arrangement, therefore, provides a capacitive pressure sensor. For example, the metal plates may be arranged on opposite sides of the gap or the second gap (e.g. one metal plate on a surface of the dielectric membrane opposite the cap layer, and one metal plate on a surface of the cap layer, opposite the dielectric membrane).

The metal plates may comprise aluminium, tungsten, titanium, platinum or gold or any other suitable metal or alloy.

Any of the pressure sensors may comprise a piezoresistor. The piezoresistor may be disposed in a layer of the thermal conductivity sensor, e.g. the cap layer. A change in the atmospheric pressure may cause a deformation of the layer where the piezoresistor is provided. The deformation of the layer may cause the deformation of the piezoresistor which may result in a change in resistance of the piezoresistor. For example, the piezoresistor may comprise doped single crystal silicon or polysilicon or any other suitable material.

In embodiments comprising a reference pressure sensor and a primary pressure sensor, the reference pressure sensor may detect changes in pressure between the pressure in the sealed chamber and the ambient pressure. The primary pressure sensor may be used to determine a more accurate value of the pressure of the external atmosphere e.g. using the reading from the reference pressure sensor. The reading from the primary pressure sensor is used to correct any effects of the ambient temperature. The temperature of the gas in the sealed chamber may, generally, be substantially the same or very close to the ambient temperature, so that the difference between the ambient temperature and the temperature of the sealed chamber, if any, will not have a significant effect on the pressure sensors. The two pressure sensors may be set up in a differential mode, for example, using a Wheatstone bridge and a differential amplifier. When further pressure and/or temperature sensors are provided, they may be arranged in a double Wheatstone bridge, wherein each Wheatstone bridge comprises four sensors, for example to compensate for changes in the ambient temperature.

The thermal conductivity sensor may comprise a primary cavity. The primary cavity may be in fluid communication with the primary chamber and/or the external atmosphere. The thermal conductivity sensor may further comprise a reference cavity. The reference cavity may be in fluid communication with the reference chamber. The primary cavity and the reference cavity may be located in the substrate potion.

The reference cavity may advantageously provide an increased volume for the sealed reference portion. As it will be understood, in some instances, the seal of the sealed portion may not be perfect and a leak, however small, may be present, into, or out of, the reference portion. An increased volume of the sealed reference portion means that the change in the amount or composition of the gas in the reference portion caused by any leak may be reduced, as a proportion of the total volume, with respect to the change caused by the same leak affecting the gas in the reference chamber alone. Decreasing the effect of a leak, by increasing the volume of the sealed reference portion, may prolong the lifetime of the sensor, and/or prolong the time between successive calibrations.

The thermal conductivity sensor may additionally comprise a primary cavity so that the total volume occupied by the gas in the primary portion and the reference portion is the same.

Preferably, the primary cavity and the reference cavity (and/or the primary chamber and the reference chamber) show substantially the same (or as similar as possible) thermal properties and thermal behaviour. They may comprise the same material or materials and, preferably, the same geometry and size.

The primary cavity, and/or the reference cavity, may be provided in the substrate portion, e.g. they may be formed by etching the substrate portion.

The primary cavity, and/or the reference cavity, may be in fluid communication with the primary chamber, or the reference chamber, respectively, via one or more openings in the intermediate layer. In some examples, the one or more openings in the intermediate layer may advantageously facilitate removing material (e.g. by etching) from the substrate portion to form the reference cavity and/or the primary cavity.

In some examples, where the primary gap and the reference gap are located in the semiconductor layer and in the intermediate layer, the primary cavity and the reference cavity are in fluid communication with the primary chamber (and/or the external atmosphere) and the reference chamber, respectively, through the respective gaps.

In some examples, the reference cavity may contain a vacuum, or a gas such as nitrogen, dry air, and/or any other gas or mixture of gases, as discussed above in relation to the reference chamber.

It will be understood that when the primary portion and the reference portion are provided on separate chips, each or either chip may be provided with a respective cavity in the same way.

In some examples, the heater (either provided to the primary membrane and/or to the reference membrane) may comprise one or more of tungsten, platinum, titanium, molybdenum, polysilicon, single crystal silicon, and/or aluminium or any other suitable material.

In some examples, the heater comprises a transistor.

In some examples, the heater is configured to function as a temperature sensor.

In some examples, the dielectric membrane (e.g. the primary dielectric membrane and/or the reference dielectric membrane) is further provided with a temperature sensor. For example, the dielectric membrane may be provided with a temperature sensor in addition to the heater.

In some examples, the temperature sensor comprises a resistor.

In some examples, the temperature sensor comprises a material having a high temperature coefficient of resistance (TCR). For example, the temperature sensor may comprise a material having a higher TCR than the TCR of tungsten.

Advantageously, a temperature sensor comprising a material having a high TCR may provide an improved sensitivity.

In some examples, the temperature sensor comprises vanadium oxide, amorphous silicon, and/or germanium. Advantageously, vanadium oxide, amorphous silicon, and germanium are high TCR materials.

In some examples, where the dielectric membrane is provided with a temperature sensor, the temperature sensor is positioned relative to the heater so the temperature sensor is sufficiently removed from the heater that, in use, the temperature sensor is not heated to the same temperature as the heater. For example, the temperature sensor may be positioned in a region of the dielectric membrane that is at a higher temperature than ambient, but at lower temperature than the heater. Advantageously, positioning the temperature sensor in this way may ensure that the temperature sensor is more stable and exhibits reduced drift over time.

For example, the temperature sensor may be laterally spaced from the heater (e.g. the temperature sensor may be laterally spaced from the heater within the dielectric membrane).

In some examples, the dielectric membrane may be configured to have two microbridges (e.g. structures formed by providing three openings in the dielectric layer). The heater may be arranged on (and/or in) a first microbridge of the two microbridges. The temperature sensor may be arranged on (and/or in) a second microbridge of the two microbridges. Arranging the heater and the temperature sensor on separate microbridges, in use, may provide sufficient thermal isolation of the temperature sensor from the heater so as to enhance the stability of the temperature sensor.

In some examples, the temperature sensor may be spaced away from a centre region of the dielectric membrane. For example, the temperature sensor may have a shape which may extend away from the centre region of the dielectric membrane. As the centre region of the dielectric membrane, in use, tends to be the part of the dielectric membrane at the highest temperature, by being removed from the centre region, the temperature sensor may be more stable and less prone to drift over time.

In particular, combining one or more of the above arrangements of the temperature sensor with a temperature sensor comprising a high TCR material (e.g. vanadium oxide, amorphous silicon, and/or germanium) may provide a highly stable temperature sensor that is less prone to drift.

Also described herein is a method of manufacturing a thermal conductivity sensor for measuring a concentration of a gas. The method may comprise: forming a dielectric layer on a substrate. The substrate may comprise a substrate portion. The substrate may comprise an intermediate layer disposed on the substrate portion. The substrate may comprise a semiconductor layer disposed on the intermediate layer. The method may comprise forming one or more openings in the dielectric layer. The method may comprise providing the dielectric layer with a heater. The method may comprise removing a portion of the semiconductor layer to form a gap, in the semiconductor layer, such that part of the dielectric layer, including the heater, is located over the gap and forms a dielectric membrane.

The dielectric membrane may be located over the gap following removal of the portion of the semiconductor layer.

For example, the substrate portion may comprise silicon. The intermediate layer may comprise a dielectric. The insulator layer may comprise an oxide (e.g. silicon dioxide). The semiconductor layer may comprise silicon.

Collectively, the substrate portion, the intermediate layer, and the semiconductor layer may be referred to as a wafer or a chip, for example a silicon-on-insulator (SOI) wafer.

Advantageously, the methods described herein may enable manufacturing of the thermal conductivity sensor using SOI technology, but this is by no means limiting.

Advantageously, the methods described herein may enable very precise control of the thickness of the gap, whereby the thickness of the gap is reliably and precisely defined. For example, the thickness of the gap (corresponding to an amount of removed, e.g. etched, material) of the semiconductor layer can be precisely controlled across the whole gap. For example, the semiconductor layer may function as a sacrificial layer and the intermediate layer may function as a barrier (for example an etch stop) layer so that the gap extends through the semiconductor layer between the membrane and the intermediate layer.

Precise control of the thickness of the gap may enable the formation of a very small gap between the membrane and the surface of the gap opposite to the membrane, which may increase the percentage amount of heat transferred through the gas, from the heater and through the membrane, to the surface of the gap opposite to the membrane. This leads to increased sensitivity of the device. In addition, it is important that the membrane is sufficiently separated from any surfaces (or layers), that it is prevented from touching those surfaces due to manufacturing tolerance or bending (e.g. caused by heating or residual stress). Any undesired contact of the membrane with the substrate through the gap would create e preferential heat transfer path through the point or region of contact thus decreasing the amount of heat transferred to the target gas. The precise control of the gap thickness, enabled by the methods described herein, therefore, advantageously provides an improved sensitivity of the sensor, while also ensuring reliability and manufacturing precision.

The dielectric layer, and/or the dielectric membrane, may comprise silicon oxide, silicon nitride, or another suitable dielectric.

In some examples, forming the dielectric membrane comprises forming a microbridge (e.g. by forming two openings, or slits, in the dielectric layer).

Removing one or more portions of the semiconductor layer may comprise providing an etchant through the one or more openings in the dielectric layer, and etching the semiconductor layer. Advantageously, the openings in the dielectric layer may enable simplified removal of one or more portions of the semiconductor layer, e.g. by etching.

The method may comprise removing a portion of the intermediate layer such that the gap is further formed in the intermediate layer. For example, the method may comprise etching one or more portions of the intermediate layer, e.g. by providing an etchant through the one or more openings in the dielectric layer and through the semiconductor layer where one or more portions have been removed.

In some examples, the etchant used to etch the semiconductor layer may be different from the etchant used to etch the intermediate layer.

Another method of manufacturing a thermal conductivity sensor described herein may comprise: forming a dielectric layer on a substrate. The substrate may comprise a substrate portion. The substrate may comprise an intermediate layer disposed on the substrate portion. The substrate may comprise a semiconductor layer disposed on the intermediate layer. The method may comprise forming one or more openings in the dielectric layer. The method may comprise providing the dielectric layer with a primary heater and a reference heater. The method may comprise removing portions of the semiconductor layer to form a primary gap in the semiconductor layer, and a primary dielectric membrane in the dielectric layer, the primary dielectric membrane provided with the primary heater, and located over the primary gap (e.g. following removal of a portion of the semiconductor layer). The method may comprise removing portions of the semiconductor layer to form a reference gap in the semiconductor layer, and a reference dielectric membrane in the dielectric layer, the reference dielectric membrane being provided with the reference heater, and located over the reference gap (e.g. following removal of a portion of the semiconductor layer). It will be understood that the primary gap and the reference gap may be formed at the same time.

For example, the substrate portion may comprise silicon. The intermediate layer may comprise a dielectric. The intermediate layer may comprise an oxide (e.g. silicon dioxide). The semiconductor layer may comprise silicon.

Collectively, the substrate portion, the intermediate layer, and the semiconductor layer may be referred to as a wafer or a chip, for example a silicon-on-insulator (SOI) wafer.

Advantageously, the methods described herein may enable manufacturing of the thermal conductivity sensor using SOI technology.

Advantageously, the methods described herein may enable very precise control of the thickness of the gap. For example, the thickness (corresponding to an amount of removed, e.g. etched, material) of the semiconductor layer may be precisely controlled across the whole gap. For example, the semiconductor layer may function as a sacrificial layer and the intermediate layer may function as a barrier (for example an etch stop) layer so that the gap extends through the semiconductor layer between the membrane and the intermediate layer.

Advantageously, the reference portion of the sensor may enable compensation for any environmental changes, such as changes in temperature, that would otherwise affect the gas concentration measurement. The reference portion may also compensate for other effects, such as common mode noise in the circuitry of supply voltage and any noise that is common to the primary and reference heaters and/or to any additional temperature sensors.

The method may further comprise forming a cap layer. The cap layer may be arranged to enclose the primary dielectric membrane in a primary chamber. The cap layer may be arranged to enclose the reference dielectric layer in a reference chamber such that the reference chamber is sealed. The method may further comprise forming a cap opening in the cap layer such that the primary dielectric membrane is in fluid communication with the external atmosphere.

The method may comprise forming the cap layer by surface micro-machining or any other suitable method.

Advantageously, the (micro-machined) cap layer can enable very precise control of the second gap on a side of the dielectric membrane opposite to the gap. As discussed with reference to the gap, the second gap may also be very small so as to increase the percentage heat transferred through the gas to the cap layer, further increasing the sensitivity of the sensor.

The method may comprise forming openings in the semiconductor layer and in the intermediate layer. The method may comprise forming the openings in the semiconductor layer and the intermediate layer prior to forming the dielectric layer.

The method may comprise forming a primary cavity and a reference cavity in the substrate portion, for example, by etching the substrate portion through the openings in the semiconductor layer and the intermediate layer.

Any of the methods described herein may comprise forming or providing a pressure sensor.

Forming or providing a pressure sensor may comprise forming and/or providing a pair of metal plates, which form a capacitor, and are arranged in the device so that a change in the external atmospheric pressure causes a deformation of the membrane and/or the cap layer so that the distance between the metal plates changes and, with it, the capacitance of the capacitor. The described arrangement, therefore, provides a capacitive pressure sensor. For example, the metal plates may be formed, or arranged on opposite sides of the gap or the second gap (e.g. one metal plate on a surface of the dielectric membrane opposite the cap layer, and one metal plate on a surface of the cap layer, opposite the dielectric membrane).

Forming or arranging the pressure sensor may comprise providing a piezoresistor in a layer of the thermal conductivity sensor, e.g. the cap layer. A change in the atmospheric pressure may cause a deformation of the layer where the piezoresistor is provided. The deformation of the layer may cause the deformation of the piezoresistor which may result in the production of an electrical signal.

It will be appreciated that, in general, any of the features of the methods described herein may be performed in any order.

Additionally described herein is a thermal conductivity sensor comprising a dielectric layer, the dielectric layer comprising a dielectric membrane. The dielectric membrane may comprise a heater in the dielectric membrane. The dielectric membrane may comprise a temperature sensor in the dielectric membrane.

In some examples, the dielectric membrane (e.g. the primary dielectric membrane and/or the reference dielectric membrane) further comprises a temperature sensor in the dielectric membrane. For example, the dielectric membrane may comprise the temperature sensor in addition to the heater.

In some examples, the temperature sensor comprises a resistor.

In some examples, the temperature sensor comprises a material having a high temperature coefficient of resistance (TCR). For example, the temperature sensor may comprise a material having a higher TCR than the TCR of heater. For example, if the heater comprises tungsten, the temperature sensor may comprise a material having a higher TCR than tungsten.

Advantageously, a temperature sensor comprising a material having a high TCR may provide an improved sensitivity.

In some examples, the temperature sensor comprises vanadium oxide, amorphous silicon, and/or germanium. Advantageously, vanadium oxide, amorphous silicon, and germanium are high TCR materials.

In some examples, where the device is provided with a temperature sensor, the temperature sensor is positioned relative to the heater such that the temperature sensor is sufficiently removed from the heater that, in use, the temperature sensor is not heated to the same temperature as the heater. For example, the temperature sensor may be positioned in a region of the dielectric membrane that is at higher temperature than ambient, but at lower temperature than the heater. Advantageously, positioning the temperature sensor in this way may ensure that the temperature sensor is more stable and exhibits reduced drift over time.

For example, the temperature sensor may be laterally spaced from the heater (e.g. the temperature sensor may be laterally spaced from the heater within the dielectric membrane).

In some examples, the primary and/or reference dielectric membrane may comprise two microbridges (e.g. structures formed by providing three openings in the dielectric layer). The heater may be arranged on (and/or in) a first microbridge of the two microbridges. The temperature sensor may be arranged on (and/or in) a second microbridge of the two microbridges. Arranging the heater and the temperature sensor on separate microbridges, in use, may provide sufficient thermal isolation of the temperature sensor from the heater to enhance the stability of the temperature sensor.

In some examples, the temperature sensor may be spaced away from a centre of the dielectric membrane. For example, the temperature sensor may have a shape which extends away from the centre region of the dielectric membrane. As the centre region of the dielectric membrane tends to be the part of the dielectric membrane at the highest temperature, by being removed from the centre region, the temperature sensor may be more stable and less prone to drift over time.

In particular, combining one or more of the above arrangements of the temperature sensor with a temperature sensor comprising a high TCR material (e.g. vanadium oxide, amorphous silicon, and/or germanium) may provide a highly stable temperature sensor that is less prone to drift.

### BRIEF DESCRIPTION OF THE DRAWINGS

Some embodiments of the disclosure will now be described by way of example only and with reference to the accompanying drawings, in which:
Figure 1 illustrates a cross-section of an example of a thermal conductivity sensor according to the present disclosure;
Figure 2 illustrates a top view of the thermal conductivity sensor illustrated in Figure 1;
Figure 3 illustrates a top view of a thermal conductivity sensor comprising a dielectric membrane in the form of a micro-bridge;
Figure 4 illustrates a cross-section of an example of a thermal conductivity sensor further wherein a portion of the insulator layer has been removed;
Figure 5 illustrates a cross-section of an example of a thermal conductivity sensor comprising a cap layer;
Figure 6 illustrates a cross-section of an example of a thermal conductivity sensor comprising a reference dielectric membrane;
Figure 7 illustrates a cross-section of an example of a thermal conductivity sensor comprising a capacitive pressure sensor comprising a pair of metal plates;
Figure 8 illustrates a cross-section of an example of a thermal conductivity sensor comprising a pressure sensor comprising two pairs of piezoresistors;
Figure 9 illustrates a cross-section of an example of a thermal conductivity sensor comprising a cavity in the semiconductor substrate;
Figure 10 illustrates a cross-section of an example of a thermal conductivity sensor comprising a lid;
Figure 11 illustrates a cross-section of an example of a thermal conductivity sensor comprising a lid, or cap layer, formed by wafer bonding;
Figure 12 illustrates a top view of an example of a thermal conductivity sensor comprising a temperature sensor;
Figure 13 illustrates a top view of an example of a thermal conductivity sensor comprising a dielectric membrane in the form of two micro-bridges, comprising a heater on a first micro-bridge of the two micro-bridges, and a temperature sensor on a second micro-bridge of the two micro-bridges;
Figure 14 illustrates a top view of an example of a thermal conductivity sensor comprising a temperature sensor which is not in the centre of the dielectric membrane;
Figure 15 illustrates a cross-section of an example of a thermal conductivity sensor comprising an alternative cap layer;
Figure 16 illustrates a cross-section of an example of a thermal conductivity sensor comprising one or more temperature sensors disposed in a different layer of the dielectric membrane to one or more heaters;
Figure 17 (A) to (G) illustrates steps of a possible method for manufacturing a thermal conductivity sensor;
Figure 18 (A) to (P) illustrates steps of another possible method for manufacturing a thermal conductivity sensor;
Figure 19 schematically illustrates an example of a method for manufacturing a thermal conductivity sensor according to the present disclosure; and
Figure 20 schematically illustrates a further example of a method for manufacturing a thermal conductivity sensor according to the present disclosure.

### DETAILED DESCRIPTION

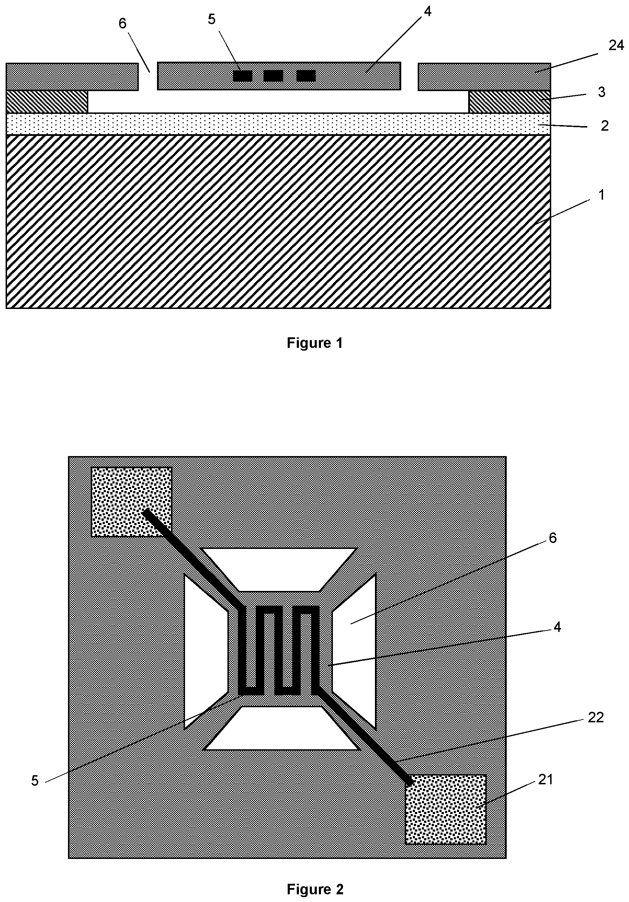

Figure 1 illustrates an example of a thermal conductivity sensor (also referred to herein as a device) according to the present disclosure. As illustrated in Figure 1, the thermal conductivity sensor comprises a substrate portion 1 (e.g. a silicon substrate), an intermediate layer 2 (e.g. a silicon dioxide), and a semiconductor (e.g. silicon) layer 3. The semiconductor layer 3, the intermediate layer 2, and the substrate portion 1 may form a silicon-on-insulator (SOI) substrate.

The thermal conductivity sensor illustrated in Figure 1 further comprises a dielectric layer 24, and a dielectric membrane 4 formed in the dielectric layer 24. For example, the dielectric layer 24 and the dielectric membrane may comprise silicon oxide or silicon nitride, or some other dielectric. Preferably, the dielectric membrane 4 comprises low stress low pressure chemical vapour deposition (LPCVD) silicon nitride, or plasma-enhanced chemical vapour deposition (PECVD) silicon nitride. The dielectric membrane 4 can also comprise more than one layer of the same or different materials.

A heater 5 is disposed (e.g. embedded) on and/or within the dielectric membrane 4. The heater 5 may be a resistive heater (e.g. the heater 5 may comprise a resistor). The heater 5 may comprise tungsten, platinum, titanium, molybdenum, polysilicon, single crystal silicon, and/or aluminium or any other suitable material. In some examples, the heater 5 comprises a diode. In some examples, the heater 5 comprises a metal-oxide-semiconductor field-effect transistor (MOSFET).

The dielectric layer 24 comprises one or more openings 6. The opening(s) 6 allow(s) the target gas to reach underneath the membrane 4, allowing more surface area for gas measurement. Particularly, the small distance between the membrane 4 and intermediate layer 2 means a higher percentage of heat transferred from the membrane, through the gas, to the intermediate layer 2 and so increases device sensitivity. The opening 6 may also be useful during fabrication to be able to etch the semiconductor layer 3 underneath the dielectric layer 24.

There may be additional layers (e.g. layers of material) between the semiconductor layer 3 and the dielectric layer 24.

A device according to the present disclosure may comprise a membrane 4 formed on top of the thin layers of the substrate, namely the semiconductor layer 3 and, optionally, the intermediate layer 2, which may act as sacrificial layer(s). This allows a very small and well-controlled gap between the membrane and the surface of the gap opposite to the membrane 4 which can increase the device sensitivity due to higher percentage of heat transferred through the gas from the membrane to the surface of the gap opposite to the membrane 4. Because this gap can be easily controlled by the thickness of the sacrificial layer(s), the reproducibility of such sensor is also improved.

In one example, the gap may be formed by providing a substrate portion, depositing a sacrificial layer above the substrate, and forming a dielectric layer above the sacrificial layer, followed by removing part of the sacrificial layer. The thickness of the sacrificial layer can be precisely controlled. While a lower thickness is better for sensitivity, it can result in manufacturing and reliability issues due to tolerance and bending of the membrane. However, to deposit a sacrificial layer to the desired thickness may require a long and/or costly process, therefore, using an SOI or similar substrate may be advantageous.

The thermal conductivity sensor according to the present disclosure may be manufactured using SOI technology. This is based on a buried layer of oxide sandwiched between a top silicon layer and a bottom, much thicker, silicon substrate. Both the thickness of the top silicon layer and the buried oxide can be well controlled. Several methods exist to manufacture SOI substrates, from Smart cut to wafer bonding.

The thickness of the top silicon layer may be increased, if desired, by growing an additional epitaxial silicon layer.

In some examples, the top silicon layer may have a thickness between 100 nm and 50 µm. This range of thickness of the semiconductor layer in a SOI substrate, or in other suitable substrates, may be particularly advantageous to obtain a gap with a thickness which may be much less than the device thermal boundary layer, and, therefore, capable of allowing a significant increase of the sensitivity of the thermal conductivity sensor of the disclosure. In some examples, the thickness of the gap may be up to 20 µm.

The gap may be configured such that the thickness of the gap is smaller than 0.5 times, e.g. smaller than 0.25 times, the width of the gap at the interface with the dielectric membrane in a direction through the centre of the membrane. In other words, since the gap defines the dielectric membrane in the dielectric layer, the thickness of the gap may be smaller than 0.5 times, e.g. smaller than 0.25 times, the width of the dielectric membrane, in a direction through the centre of the dielectric membrane.

In some examples, the thickness of the gap is between 0.25 and 4 times a thickness of the dielectric membrane.

In examples described herein comprising a primary dielectric membrane and a primary gap, and a reference dielectric membrane and a reference gap, the primary gap may be configured such that the thickness of the primary gap is smaller than 0.5 times, e.g. smaller than 0.25 times, the width of the primary gap at the interface with the primary dielectric membrane in a direction through the centre of the primary dielectric membrane. In other words, since the primary gap defines the primary dielectric membrane in the dielectric layer, the thickness of the primary gap may be smaller than 0.5 times, e.g. smaller than 0.25 times, the width of the primary dielectric membrane, in a direction through the centre of the primary dielectric membrane.

The reference gap may be configured such that the thickness of the reference gap is smaller than 0.5 times, e.g. smaller than 0.25 times, the width of the reference gap at the interface with the reference dielectric membrane in a direction through the centre of the reference dielectric membrane. In other words, since the reference gap defines the reference dielectric membrane in the dielectric layer, the thickness of the reference gap may be smaller than 0.5 times, e.g. smaller than 0.25 times, the width of the reference dielectric membrane, in a direction through the centre of the reference dielectric membrane.

In examples, the primary gap may have a thickness between 0.25 and 4 times a thickness of the primary dielectric membrane. In some examples, the reference gap may have a thickness between 0.25 and 4 times a thickness of the reference dielectric membrane.

In some examples, the primary gap has a thickness of up to 20 µm. In some examples, the reference gap has a thickness of up to 20 µm.

In some examples, the bottom silicon substrate may have a thickness between 50 µm and 500 µm.

The use of SOI substrates allows for the top silicon and/or the buried oxide of the wafer to be used as sacrificial layers and create etched portions with very well controlled dimensions.

Figure 2 shows the top view of an example device. The membrane 4 is supported by four beams. The heater 5 is on the membrane 4, and a track 22 leads to bond pads 21.

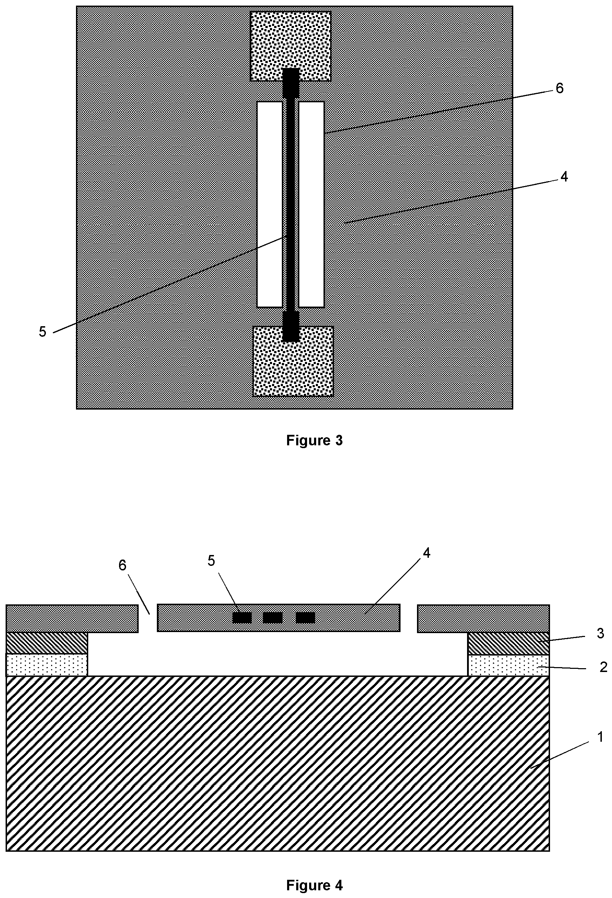

Figure 3 shows a membrane 4 in the form of a microbridge supported at two ends. For example, the microbridge may be formed by forming two openings 6 as slits.

Figure 4 shows a thermal conductivity sensor, or device, where part of the intermediate layer 2 below the membrane 4 is also removed. This allows a larger distance between the membrane and the surface of the gap opposite to the membrane, allowing for more manufacturing tolerance and bowing of the membrane during operation.

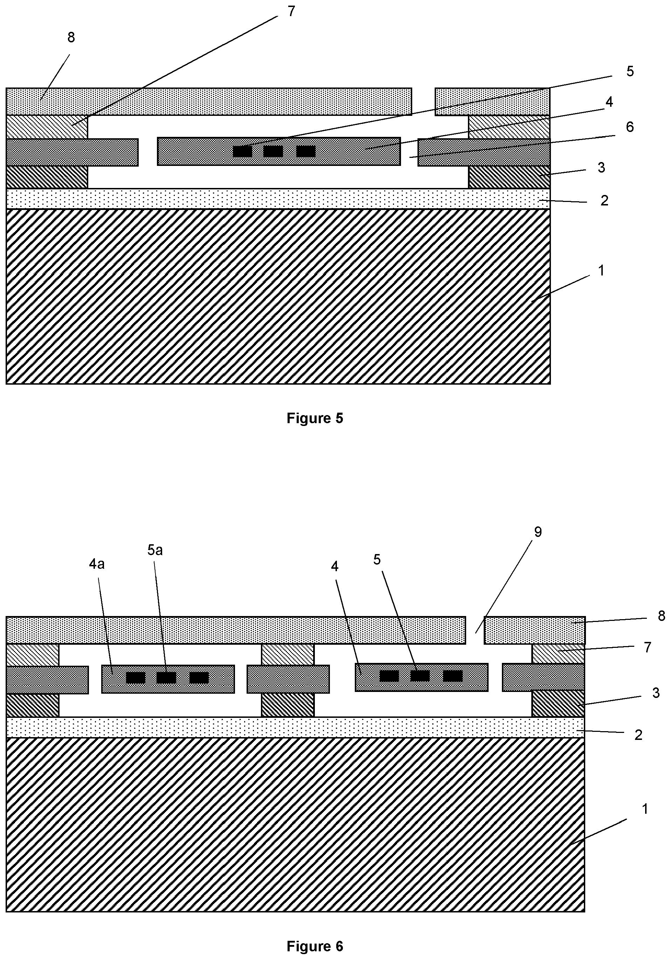

Figure 5 illustrates a thermal conductivity sensor additionally comprising a cap layer 8 (also referred to as a lid). The thermal conductivity sensor of Figure 5 also comprises a separator layer 7 which acts as a separator between the membrane 4 (i.e. the dielectric layer) and the cap layer 8.

An advantage of the example of Figure 5 is that a surface is provided above the membrane as well and in close proximity to the membrane, further increasing the percentage of heat transferred through the air, and hence the sensitivity of the sensor.

In some examples, the cap layer 8, and/or the separator layer 7, comprise a dielectric such as silicon dioxide or silicon nitride or any other suitable dielectric material. In some examples, the cap layer 8 and/or the separator layer 7 comprise a semiconductor such as silicon, and/or a metal. The cap layer 8 and/or the separator layer 7 may each comprise more than one layer of the same or different materials.

Figure 6 illustrates an example of a thermal conductivity sensor comprising a primary portion and a reference portion each comprising a respective dielectric membrane. The reference portion, on the right of Figure 6, has a continuous cap layer 8 which, together with the separator layer 7, the semiconductor layer 3 and the intermediate layer 2, forms a sealed reference chamber which isolates the reference membrane 4a from the external atmosphere. The primary portion, shown on the left of Figure 6, on the other hand, has a primary membrane 4 which is exposed to the atmosphere through a hole or opening 9. Figure 6 shows the opening 9 in the cap layer 8 but this is by no means limiting and the opening 9 may be located elsewhere as long as it provides a fluidic communication between the primary membrane 4 and the external atmosphere. The primary portion and the reference portion may be used in combination in a differential circuit.

The reference dielectric membrane 4a may comprise a reference heater 5a.

In some examples, there may be two heaters on each membrane, connected so as to form a Wheatstone bridge or any other suitable differential circuit. In some examples, each membrane may be provided with a temperature sensor which is distinct from the respective heater(s). The sealed chamber of the reference portion, may be kept under vacuum, or it may be filled with nitrogen, dry air, or any other gas or mixture of gases at any pressure.

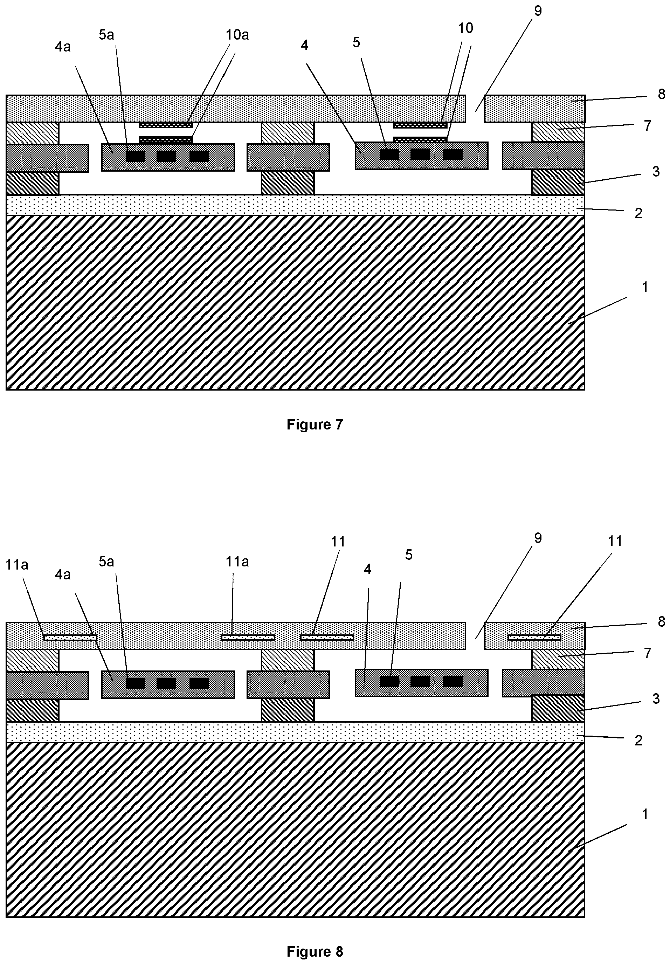

Figure 7 illustrates an example, similar to the example illustrated in Figure 6, further comprising two pairs or metal plates 10 and 10a. These together with the cap layer 8 provide a capacitive pressure sensor in each of the portions of the device. The two pressure sensors can be used to correct effects of pressure and/or temperature variations on the sensor readings.

Figure 8 illustrates an example in which two pairs of piezoresistors 11 and 11a together with the cap layer 8 provide alternative pressure sensors.

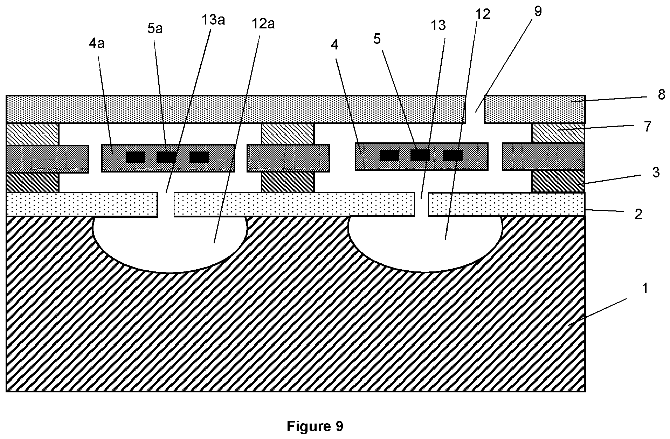

Figure 9 illustrates an example of a thermal conductivity sensor, similar to the example of Figure 6, comprising cavities 12, 12a in the first substrate portion 1. The cavities 12, 12a may be formed by forming one or more holes or openings 13, 13a in the intermediate layer 2, and then performing, for example, an isotropic etch to remove some of the material of the first substrate portion 1. The cavity 12a is in fluid communication with the corresponding gap and the second gap, if present, and it is sealed so as to be isolated from the external atmosphere.

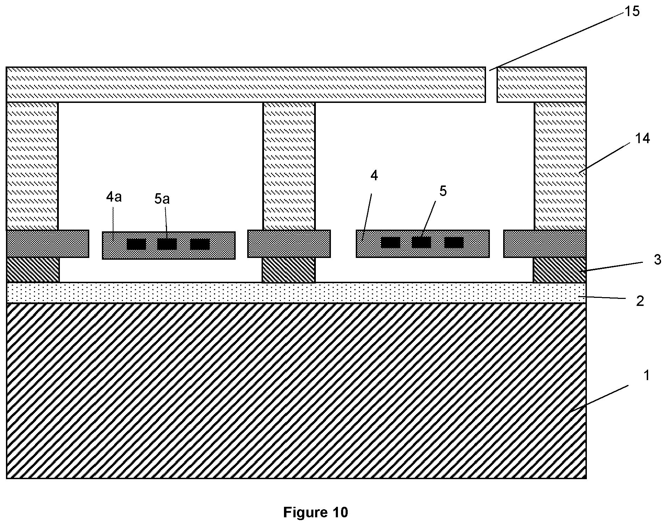

Figure 10 shows an example of a device having a cap or lid 14 on top of the substrate, through the dielectric layer 24. Again, the reference portion is sealed while the primary portion is exposed to the external atmosphere though hole 15.

The cap or lid 14 has cavities within it to allow space for the membrane 4. The lid 14 may be attached to the substrate, as part of a wafer bonding process, by fusion or direct bonding, anodic bonding, adhesive, eutectic or glass frit bonding. The lid 14 may comprise silicon and/or glass, though other materials may also be used. The lid 14 can also be made of silicon and have circuitry (not shown) on it.

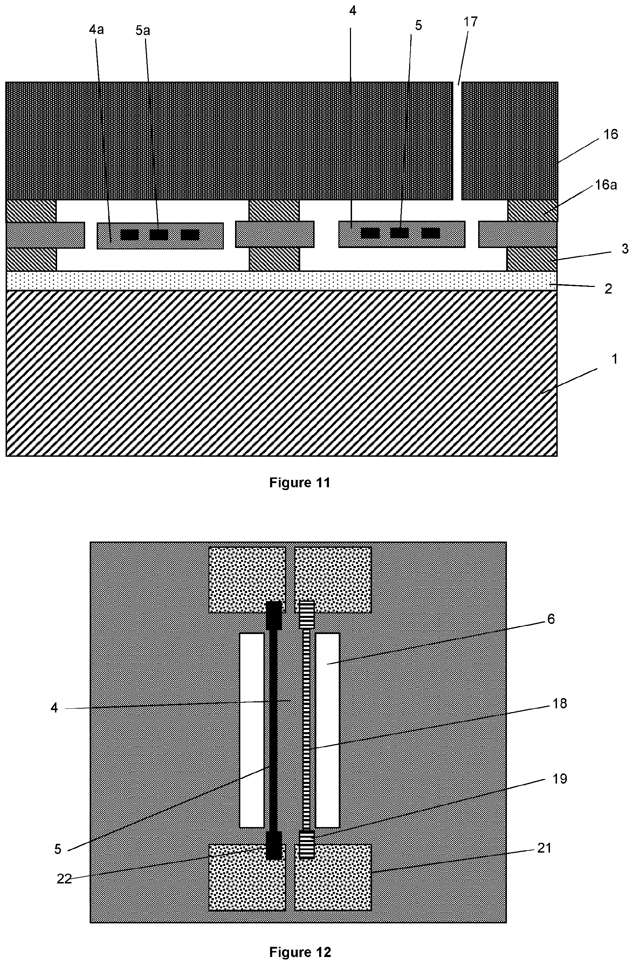

Figure 11 shows another example of a device formed by a wafer bonding process. In this structure an additional layer 16a is provided between the lid 16 and the membrane 4, 4a. The thickness of layer 16a can be controlled very precisely and may allow to increase the percentage of heat transferred from the membranes through the gas, to the lid 16 by providing a suitably small second gap. The lid 16 is provided with the hole or aperture 17, to allow fluid communication between the primary membrane 4 and the external atmosphere.

In some examples, the lid or cap layer, may comprise an application-specific integrated circuit (ASIC) and/or other circuitry.

In other examples, a substrate portion or chip of the thermal conductivity sensor may comprise an ASIC and/or other circuitry.

Figure 12 shows a top view of a bridge type membrane comprising a temperature sensor 18. The temperature sensor 18 is connected by a track 19 to the bond pads 21. The temperature sensor 18 may be a diode, a transistor or a thermopile. It may, alternatively, be a resistive temperature sensor made of polysilicon, single crystal silicon or a metal such as tungsten, aluminium, gold or platinum, or any other suitable material. Preferably, it is a resistive temperature sensor made of a material with a high TCR (temperature coefficient of resistance), such as vanadium oxide, amorphous silicon or germanium or the like. It is also possible to have a temperature sensor on membranes of different shapes and/or configurations.

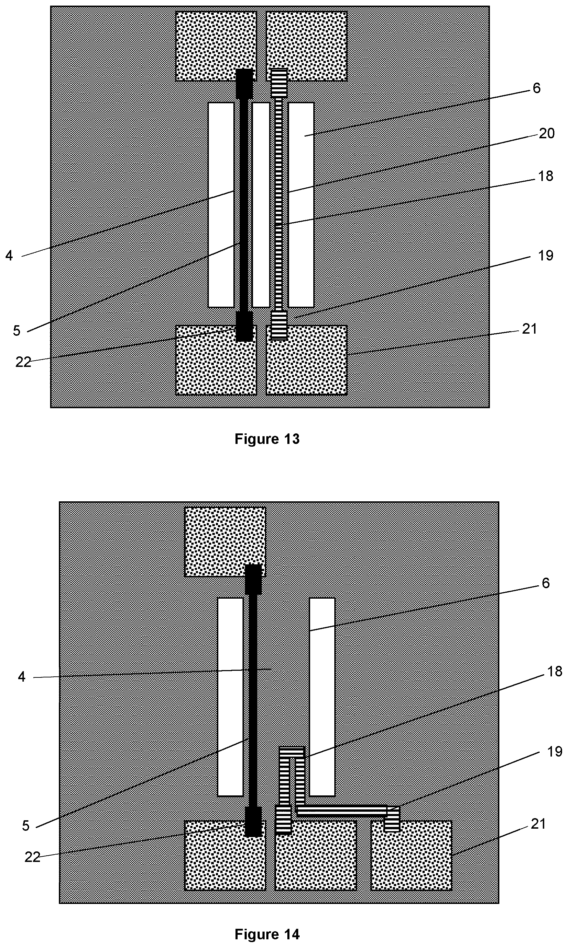

Figure 13 shows an example of a device with two microbridges. One microbridge has a heater 5, the other has a temperature sensor 18. Positioning the heater 5 and the temperature sensor 18 on different microbridges, in use, may provide thermal isolation of the temperature sensor 18 from the heater 5.

Figure 14 shows an example of a temperature sensor 18 which is spaced apart from the centre region of the membrane 4. For example, the temperature sensor 18 follows a path between bond pads 21 that avoids the centre region of the membrane 4. This is because, in use, the centre region is typically at higher temperature than the rest of the membrane 4. The temperature sensor is adjacent to (or embedded in) a region of the membrane 4 which is at higher temperature than ambient, but still at lower temperature than the heater. The advantage of this or similar configurations of the temperature sensor 18 is that, when used at temperatures lower than the temperature of the heater, the temperature sensor is more stable and has less drift over time. This may particularly be the case for high TCR materials such as vanadium oxide, germanium or amorphous silicon. In another example (not shown), the temperature sensor 18 may be laterally spaced from the heater 5 in an arrangement similar to the one shown in Figure 12, but where the microbridge is wider than the one shown in Figure 12, so that the temperature sensor 18 may be positioned further away from the heater 5.

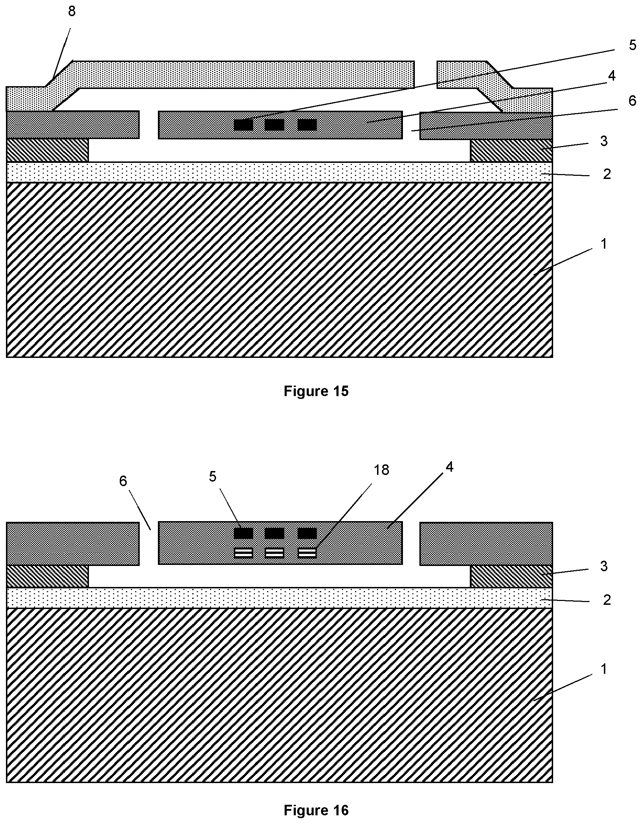

Figure 15 illustrates an example, similar to the one shown in Figure 5, but including a cap layer 8 of a different shape, and which is directly in contact with the dielectric layer.

In some examples, a thermal conductivity sensor according to the present disclosure may include an ambient temperature sensor

Figure 16 illustrates an example of a thermal conductivity sensor in which one or more temperature sensors 18 are disposed in a different layer of the dielectric membrane 4 to that of one or more heaters 5. While Figure 16 illustrates the heater(s) 5 above the temperature sensor(s) 18, it will be appreciated that the heater(s) 5 can also, or alternatively, be located below the temperature sensor(s) 18.

The heater and temperature sensors have been shown as thin linear wires. However, it will be understood that they can also be in a circular or rectangular shape, such as a ring shape, a multi-ringed shape, or a meander shape or any other suitable shape.

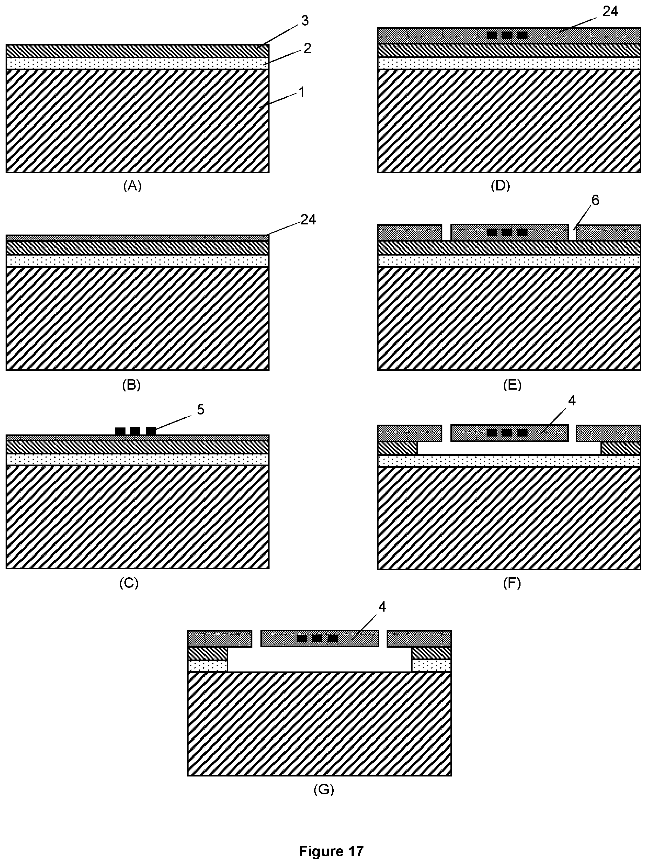

Figure 17 illustrates one possible method for manufacturing a device such as the thermal conductivity sensor illustrated in Figure 1, comprising the following steps:
(A) Providing a substrate comprising a substrate portion 1, an intermediate layer 2, and a semiconductor layer 3;
(B) Depositing an initial layer of a dielectric layer 24 on the semiconductor layer 3;
(C) Forming or providing a heater 5 on the initial layer of the dielectric layer 24;
(D) Depositing an additional layer of the dielectric layer 24 (the whole dielectric layer 24 may comprise one material, or may comprise multiple layers of the same or different dielectric materials);
(E) Forming one or more holes or apertures 6 in the dielectric layer 24;
(F) Removing part of the material of the semiconductor layer 3, to create a gap in the semiconductor layer 3, and a membrane 4, in the dielectric layer 24, above the gap (removing part of the material of the semiconductor layer 3 may include etching where the holes 6, created in step E, allow an etchant to etch the semiconductor layer 3).
This example method provides a device as the one shown in Figure 1. The method may further comprise:
(G) Removing part of the material of the intermediate layer 2 (for example in a further etching step using a suitable etchant).
Step G may be performed if the structure shown in Figure 4 is required.

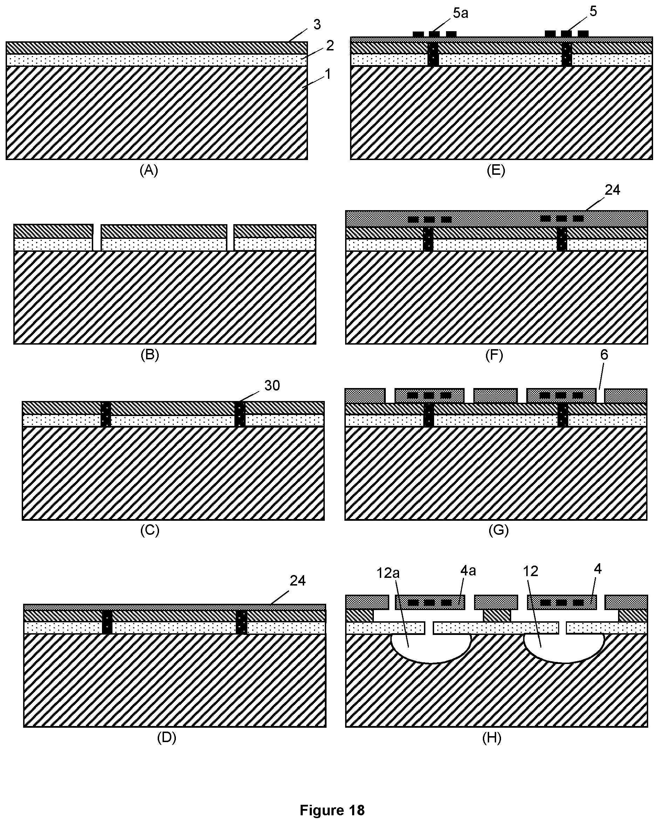

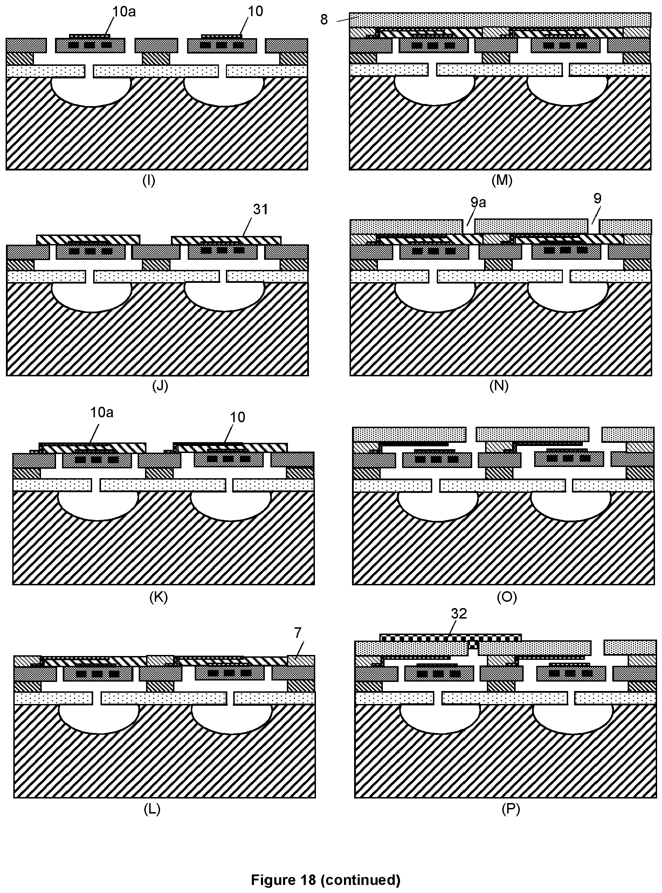

Figure 18 illustrates a further possible method for manufacturing a thermal conductivity sensor according to the present disclosure, comprising the following steps:
(A) Providing a substrate comprising a substrate portion 1, an intermediate layer 2 and a semiconductor layer 3;
(B) Forming one or more holes or apertures in the semiconductor layer 3 and intermediate layer 2;
(C) Filling the holes or apertures, formed in step B, with a sacrificial material 30 (preferably, the sacrificial material 30 is deposited so that its surface at the top is flush with the top surface of the semiconductor layer 3);
(D) Depositing an initial layer of a dielectric layer 24 on the semiconductor layer 3;
(E) Forming or providing heaters 5 and 5a (each or either heater may be a resistive heater made of metal, polysilicon, or even single crystal silicon; it is also possible to make the heater(s) as a transistor - this may involve a number of further fabrication steps);
(F) Depositing an additional layer of the dielectric layer 24;
(G) Forming holes or apertures 6 in the dielectric layer 24;
(H) Removing part of the material of the semiconductor layer 3, the sacrificial layer 30 and part of the material of the substrate portion 1 (this creates gaps in the semiconductor layer 3 and respective membranes 4 and 4a over the gaps, and the cavities 12 and 12a: this may be done, for example, by etching in a single step, using an etchant that etches the semiconductor layer 3, the sacrificial layer 30 and the substrate portion 1; alternatively, this can be done in multiple steps:
   (i) etching part of the semiconductor layer 3; (ii) etching the sacrificial layer 30;
   (iii) etching the substrate portion 1);
(I) Forming metal plates 10, 10a on the membranes 4 and 4a;
(J) Depositing another sacrificial layer 31 on the membranes 4 and 4a and the metal plates 10, 10a;
(K) Forming metal plates 10 and 10a on the sacrificial layer 31, and extending on the dielectric layer 24;
(L) Depositing a separator layer 7 and patterning it;
(M) Depositing a cap layer 8;
(N) Forming holes 9 and 9a in the cap layer 8;
(O) Removing the sacrificial layer 31 through holes 9 and 9a;
(P) Closing hole 9a by means of a layer 32.

It should be noted that Figure 18(P) also shows an alternative embodiment of the device of the disclosure, comprising a hole 9a, above the reference portion, sealed by means of layer 32.

In an alternative process, step H may be skipped. Instead, this step may be performed after step O, when the sacrificial layer 31 is removed.

Simpler structures may, of course, be created by skipping some of the above steps. For example, steps I and K may be skipped if the metal plates 10,10a are not required.

Instead or in addition to one or more sets of metal plates 10, 10a, one or more piezoresistors 11,11a may be formed or provided during the formation of the cap layer 8.

Step L may be skipped, resulting is structures similar to the one shown in Figure 15.

The entire series of steps from I onwards may be skipped if the cap layer 8 and metal plates 10,10a are not required.

It will be understood that, after step H, a cap or lid formed ex *situ* can still be provided to the device and attached to the dielectric layer, with any method known in the art, in order to form at least a sealed chamber enclosing one of the membranes.

The other membrane may or may not be enclosed in a primary chamber fluidically connected to the external atmosphere. It will be appreciated that a separator layer 7 (if required) may still be formed in advance of attaching the cap or lid, so that the cap or lid is attached to the separator layer 7 rather than to the dielectric layer 24. It will further be appreciated that pressure sensors, comprising, for example, metal plates or piezoresistors, may be provided to the device in additional method steps.

If the cavity 12 within the substrate portion 1 is not needed, then steps B and C may be skipped.

It will be appreciated that, if desired, the steps necessary to form a cavity 12 may be added to the method described above, for the manufacture of a device as the ones shown in Figures 1 and 4.

Step C may be skipped if the holes in the intermediate layer 2 and in the semiconductor layer 3 are small enough so as to prevent the dielectric material from entering the holes during the deposition step D.

It should be noted that many of the above steps can be performed using standard processes known in semiconductor/MEMS technology field, such as lithography, deposition by sputtering or chemical vapour deposition and etching.

An example method to fabricate a thermal conductivity sensor such as the sensor illustrated in Figure 1 may comprise: starting with (e.g. obtaining, or receiving) a substrate comprising a substrate portion 1, an intermediate layer 2 and a semiconducting layer 3; depositing a dielectric layer 24 above the semiconductor layer 3; forming one or more holes 6, or openings, within the dielectric layer 24; and removing part of the semiconductor layer 3, to form a gap in the semiconductor layer 3, and a membrane 4 above the gap and in the dielectric layer 24.

An example method to fabricate a thermal conductivity sensor such as the sensor illustrated in Figure 4 may comprise additionally removing part of the material of the intermediate layer 2. This may be done for example by etching using two different etchants for the semiconductor layer 3 and the intermediate layer 2.

An example method to fabricate a thermal conductivity sensor such as the sensors illustrated in Figures 5 and 15 may comprise: forming a sacrificial layer on part of the dielectric layer 24; forming one or more additional layers above the dielectric layer 24 and the sacrificial layer; creating holes, or openings, in the one or more additional layers; and etching the sacrificial layer.

An example method to fabricate a thermal conductivity sensor such as the sensor illustrated in Figure 9 may comprise, before depositing the dielectric layer 24, forming, e.g. by etching, holes or openings in the intermediate layer 2 and semiconductor layer 3, and filling the holes with a sacrificial layer. Before the filling of the holes with sacrificial layer, cavities 12,12a may be formed in the substrate portion 1, for example by etching. Alternatively, the formation of cavities 12,12a may be a later step in the process.

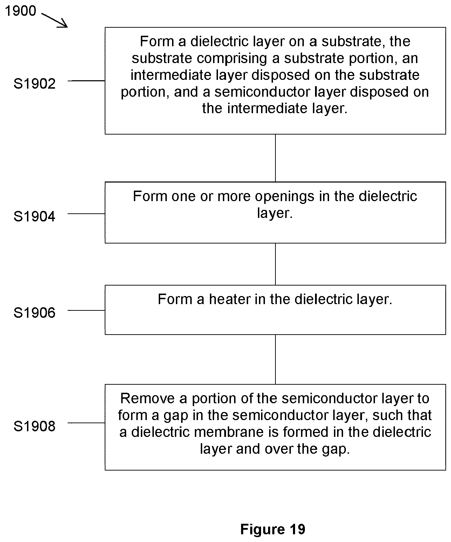

Figure 19 schematically illustrates an example of method 1900 of manufacturing a thermal conductivity sensor for measuring a concentration of a gas according to the present disclosure.

In a step S1902, the method 1900 comprises forming a dielectric layer on a substrate, the substrate comprising a substrate portion, an intermediate layer disposed on the substrate portion, and a semiconductor layer disposed on the intermediate layer.

In a step S1904, the method 1900 comprises forming one or more holes or openings in the dielectric layer.

In a step S1906, the method 1900 comprises providing the dielectric layer with a heater. It will be understood, e.g. from Figures 17 and 18, that disposing the heater in the dielectric membrane may take place during formation of the dielectric membrane.

In a step S1908, the method 1900 comprises removing a portion of the semiconductor layer to form a gap in the semiconductor layer, such that a dielectric membrane is formed in the dielectric layer and over the gap.

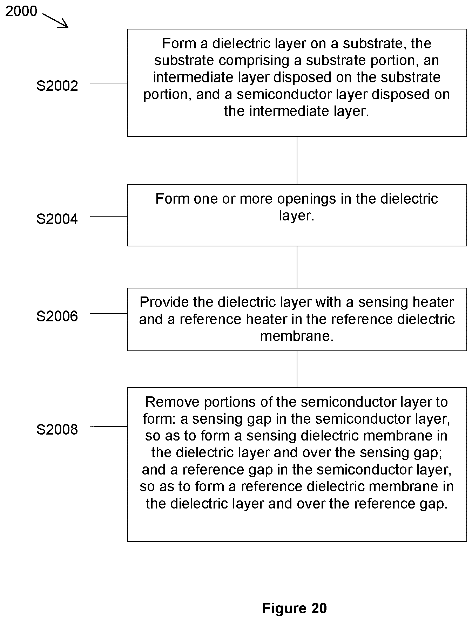

Figure 20 schematically illustrates a further example of a method 2000 of manufacturing a thermal conductivity sensor for measuring a concentration of a gas according to the present disclosure.

In a step S2002, the method 2000 comprises forming a dielectric layer on a substrate, the substrate comprising a substrate portion, an intermediate layer disposed on the substrate portion, and a semiconductor layer disposed on the intermediate layer.

In a step S2004, the method 2000 comprises forming one or more openings in the dielectric layer.

In a step S2006, the method 2000 comprises providing the dielectric layer with a primary heater and a reference heater. It will be understood, e.g. from Figures 17 and 18, that providing a heater in a dielectric membrane may take place during formation of the dielectric layer.

In a step S2008, the method 2000 comprises removing portions of the semiconductor layer to form: a primary gap in the semiconductor layer, so as to form a primary dielectric membrane in the dielectric layer and over the primary gap; and a reference gap in the semiconductor layer, so as to form a reference dielectric membrane in the dielectric layer and over the reference gap.

It will be understood that, in all the example methods, the heater(s) may be provided on the dielectric layer or partially or totally embedded in the dielectric layer. It will further be understood that the heater(s) may be provided to specific regions of the dielectric layer which will define the corresponding membrane once the respective gap has been formed.

Even though the gap(s) formed in the semiconductor layer 3 or in both the semiconductor layer 3 and the intermediate layer 2, are shown in the drawings as having substantially straight lateral walls through the gap thickness, it will be understood that, depending on the method of removing the material to form the gaps, the lateral walls may not be straight but they may be curved, for example concave.

In some examples of the methods described herein, the second primary gap may be smaller than 0.5 times, e.g. smaller than 0.25 times, the width of the primary dielectric membrane, in a direction through the centre of the primary dielectric membrane. The thickness of the second reference gap may be smaller than 0.5 times, e.g. smaller than 0.25 times, the width of the reference dielectric membrane, in a direction through the centre of the reference dielectric membrane. In some examples, the second primary gap may have a thickness between 0.25 and 4 times a thickness of the primary dielectric membrane. In some examples, the second reference gap may have a thickness between 0.25 and 4 times a thickness of the reference dielectric membrane. In some examples, the second primary gap has a thickness of up to 20 µm. In some examples, the second reference gap has a thickness of up to 20 µm.

The skilled person will understand that in the preceding description and appended claims, positional terms such as `above', 'below, 'under', 'lateral', etc. are made with reference to conceptual illustrations of an device, such as those showing standard cross-sectional perspectives and those shown in the appended drawings. These terms are used for ease of reference but are not intended to be of limiting nature. These terms are therefore to be understood as referring to a device when in an orientation as shown in the accompanying drawings.

Although the disclosure has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the disclosure, whether alone or in any appropriate combination with any other feature disclosed or illustrated herein.

## Claims

1. A thermal conductivity sensor for measuring a concentration of a gas, the sensor comprising:
a substrate portion;
an intermediate layer disposed on the substrate portion;
a semiconductor layer disposed on the intermediate layer; and
a dielectric layer comprising a dielectric membrane, the dielectric membrane provided with a heater;
wherein the dielectric membrane is located over a gap, the gap being located in the semiconductor layer.

2. The thermal conductivity sensor according to claim 1, wherein the gap is located in the intermediate layer.

3. The thermal conductivity sensor according to claim 1 or 2, wherein:
the substrate portion comprises a semiconductor; and
the intermediate layer comprises an insulator, and, optionally, wherein the substrate portion, the intermediate layer, and the semiconductor layer collectively form a chip, preferably a silicon-on-insulator chip.

4. The thermal conductivity sensor according to any one of the preceding claims, wherein the gap has a thickness of 0.5 times or less the width of the dielectric membrane.

5. The thermal conductivity sensor according to any one of the preceding claims, wherein the gap has a thickness between 0.25 and 4 times a thickness of the dielectric membrane.

6. The thermal conductivity sensor according to any one of the preceding claims, wherein the gap has a thickness of up to 20 µm.

7. The thermal conductivity sensor according to any one of the preceding claims, further comprising a cap layer disposed over the dielectric layer, and a second gap between the cap layer and the dielectric membrane, optionally, wherein the second gap has a thickness of up to 20 µm.

8. The thermal conductivity sensor according to claim 7, comprising a pressure sensor, such as
a pair of metal plates configured to provide a capacitive pressure sensor; and/or
a piezoresistor
disposed in the cap layer.

9. The thermal conductivity sensor according to any one of the preceding claims, wherein the dielectric membrane is a primary dielectric membrane, and wherein the thermal conductivity sensor further comprises a reference dielectric membrane provided with a reference heater, wherein the reference dielectric membrane is located over a reference gap;
wherein the primary dielectric membrane is exposed to the external atmosphere; and
wherein the reference dielectric membrane is disposed in a sealed chamber.

10. The thermal conductivity sensor according to any one of the preceding claims, wherein the dielectric membrane is a primary dielectric membrane, and wherein the dielectric layer further comprises a reference dielectric membrane provided with a reference heater;
wherein the reference dielectric membrane is located over a reference gap, the reference gap being located in the semiconductor layer;
wherein the thermal conductivity sensor comprises a cap layer, the cap layer being arranged to enclose the primary dielectric membrane in a primary chamber, and to enclose the reference dielectric membrane in a reference chamber, the reference chamber being sealed, and the cap layer comprising a cap opening arranged such that the primary chamber is in fluid communication with the external atmosphere;
wherein the primary chamber comprises a primary pressure sensor; and
wherein the reference chamber comprises a reference pressure sensor, and optionally further comprising:
a primary cavity, the primary cavity being in fluid communication with the primary chamber; and
a reference cavity, the reference cavity being in fluid communication with the reference chamber.

11. The thermal conductivity sensor according to any one of the preceding claims, wherein the dielectric membrane is further provided with a temperature sensor, preferably comprising at least one of vanadium oxide, amorphous silicon, and germanium.

12. The thermal conductivity sensor according to claim 11, wherein the temperature sensor is laterally spaced from the heater so that, in use, the temperature of the temperature sensor is lower than the temperature of the heater.

13. The thermal conductivity sensor according to claim 11 or claim 12, wherein the dielectric membrane comprises two microbridges, wherein the heater is arranged on a first microbridge of the two microbridges, and wherein the temperature sensor is arranged on a second microbridge of the two microbridges.

14. A method of manufacturing a thermal conductivity sensor for measuring a concentration of a gas, the method comprising:
forming a dielectric layer on a substrate, the substrate comprising a substrate portion, an intermediate layer disposed on the substrate portion, and a semiconductor layer disposed on the intermediate layer;
forming one or more openings in the dielectric layer;
providing the dielectric layer with a heater; and
removing a portion of the semiconductor layer to form a gap in the semiconductor layer and a dielectric membrane in the dielectric layer, such that the dielectric membrane is located over the gap.

15. The method according to claim 14, wherein removing the portion of the semiconductor layer comprises providing an etchant through the one or more openings in the dielectric layer, and etching the semiconductor layer.
